# EUROPEAN PATENT APPLICATION

(11) **EP 2 246 715 A2**
(43) Date of publication of application: **03.11.2010**
(21) Application number: 10160076.5
(22) Date of filing: 15.04.2010
(51) Int. Cl.: G01W 1/00, G01W 1/08, G01W 1/10

(54) **Method for compiling and displaying atmospheric uncertainty information**

(30) Priority: 28.04.2009 US 387217
(71) Applicant: Honeywell International Inc., Morristown, NJ 07962 (US)
(72) Inventor: Kolcarek, Pavel, Morristown, NJ 07962-2245 (US); Krupansky, Petr, Morristown, NJ 07962-2245 (US); Svoboda, Jiri, Morristown, NJ 07962-2245 (US)
(74) Representative: Buckley, Guy Julian

(57) **Abstract**

A method of displaying on a display (104) of a vehicle includes presenting atmospheric uncertainties, including collecting (806) weather data (400), obtaining (802) weather information recorded along trajectories (203, 205, 207) of at least one vehicle (202, 204, 206), the weather information having a higher importance proportional to the portion of the trajectory (210, 216, 218) most recently traversed, creating (804) a threshold uncertainty map (300) of the weather information obtained along the trajectories (203, 205, 207), joining (808) the threshold uncertainty map (300) with the weather data (400), combining (810) an atmospheric field (400) with the joined threshold uncertainty map and the weather data, and displaying (812) the combined atmospheric field, threshold uncertainty map, and weather data on a display (104). The weather data may be recent, historical, or forecasted and may be modified to be a stochastic model.

## Description

### FIELD OF THE INVENTION

The present invention generally relates to rendering atmospheric uncertainty information and more particularly to compiling and displaying wind uncertainty information on navigation displays.

### BACKGROUND OF THE INVENTION

World wide air traffic is projected to double every ten to fourteen years and the International Civil Aviation Organization (ICAO) forecasts world air travel growth of five percent per annum until the year 2020. Such growth may cause degradation in safety and performance and an increase in an already high workload of the flight crew. One of the largest negative influences on flight performance has been unreliable weather forecasts. Reliable weather forecast with accurate data and transparent (understandable) representation on the display can significantly improve situational awareness of the flight crew resulting in increased flight safety and performance.

One known system discloses a weather radar system that displays representational images of the weather and attaches symbols indicating the "uncertainty" of the data displayed. The "uncertainty" represents the quality and reliability (probability of the accuracy, or inaccuracy) of the data.

Another known system discloses communicating an uncertainty of a location of an object near an aircraft. However, both of these known systems that rely only on on-board sensors are limited to the vantage point of the aircraft taking the measurements.

Accordingly, it is desirable to provide a method of compiling from multiple sources and rendering a transparent presentation of the weather to assist the flight crew to evaluate the current situation, leading to improved economy and safety. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

In one exemplary embodiment, a method of displaying, on a display of a vehicle, atmospheric uncertainties including a threshold uncertainty map of weather data recorded from at least one vehicle superimposed on a weather map including meteorological data provided by another source. The meteorological data may be recent, historical, or forecasted and may be modified to be a stochastic model of the historical or forecasted meteorological data.

Another exemplary embodiment is a method of presenting atmospheric uncertainties, including collecting weather data, obtaining weather information recorded along trajectories of at least one vehicle, the weather information having a higher importance proportional to the portion of the trajectory most recently traversed, creating a threshold uncertainty map of the weather information obtained along the trajectories, joining the threshold uncertainty map with the weather data, combining an atmospheric field with the joined threshold uncertainty map and the weather data, and displaying the combined atmospheric field, threshold uncertainty map, and weather data on a display.

### BRIEF DESCRIPTION OF THE DRAWINGS

The patent or application file contains at least one drawing executed in color. Copies of this patent or patent application publication with color drawings will be provided by the Office upon request and payment of the necessary fee. The preferred exemplary embodiment of the present invention will hereinafter be described in conjunction with the appended drawings, where like designations denote like elements, and:

FIG. 1 is a block diagram of a system that performs the exemplary embodiments of the present invention;

FIG. 2 is a representation of a weather uncertainty data grid of aircraft flight trajectories;

FIG. 3 is a representation of a threshold uncertainty data based on the weather uncertainty data grid of FIG. 2;

FIG. 4 is a representation of a weather data grid;

FIG. 5 is a representation of the threshold uncertainty data of FIG. 3 superimposed on the weather data grid of FIG. 4;

FIG. 6 is a representation of the representation of FIG. 5 including symbols showing wind direction;

FIG. 7 is a display of a planned route of flight over the representation of FIG. 6; and

FIG. 8 is a flow chart of the steps of the exemplary embodiments.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

A method is disclosed herein of displaying in two dimensions the current weather situation, such as the wind, to assist the flight crew in evaluating the current situation, thereby leading to improved economy and safety. This display provides a statistical representation of the weather data for more accurate aircraft trajectory prediction and flight performance. This presentation will inform the aircrew about the level of confidence for a particular path segment prediction with respect to weather influencing the predicted trajectory. The method utilizes statistical methods for weather modeling including shared weather data from surrounding aircraft to enhance accuracy and reliability (in the form of uncertainty) of weather information presented to the aircrew. The statistical methods include the mutual interrelation of weather parameters compiled and stochastic behavior of the weather. For example, wind magnitude (velocity) is modeled as the sum of a deterministic, nominal component (meteorological predictions) and a stochastic component (inaccuracy and uncertainty of these predictions). A mathematical process of obtaining these two components is provided in Chapter 4 of the paper "A Stochastic Hybrid Model for Air Traffic Management Processes" by I. Lymperopoulos et al., Department of Information Technology and Electrical Engineering, Swiss Federal Institute of Technology, Zurich, 2007.

Weather data is combined with statistical representations of data measured by other aircraft passing the flight route of interest. In a broad sense, the method displays a threshold uncertainty map of at least one aircraft superimposed on a wind map including meteorological data. More specifically, the method disclosed herein receives weather data from other aircraft, visualizes an "aircraft uncertainty trace" of other aircraft, blends the "aircraft uncertainty traces" into one uncertainty map, and merges the uncertainty map with a weather map indicating forecasted weather or historical data, such as wind magnitudes and bearings. This uncertainty map may serve as another layer of information on a navigation display, for example, a weather radar layer, terrain map, or ground proximity warnings as well as other flight plan information.

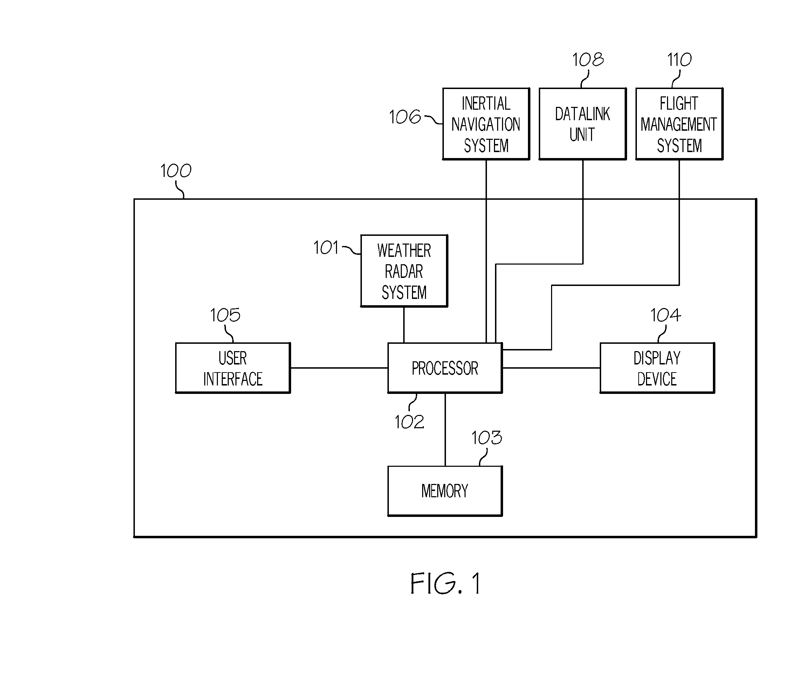

Referring to FIG. 1, an exemplary system 100 is coupled to an inertial navigation system 106, datalink unit 108, flight management system 110, and includes a weather radar system 101, a processor 102, a memory 103, a display device 104, and a user interface 105. The display processor 102 is electrically coupled to the radar system 101, the display device 104, the inertial navigation system 106, the data link 108, the flight management system 110, the memory 103, and the user interface 105.

The weather radar system 101 receives signals that arise from the scattering of transmitted pulses from the external environment including primarily weather and terrain. The received signals are passed to the processor 102, which uses the received signals to update estimates of weather reflectivity and ground normalized radar cross section contained in computer memory (three-dimensional buffer). The radar system 101 may also receive signals from other sources, for example a ground based station, of forecasted or historical weather information in the vicinity of the flight path, wherein the weather information is processed by, for example, the Lymperopoulos mathematical process mentioned above. The processor 102 generates an image for presentation on the display device 104 based on any control signals sent from the user interface 105 or based on settings within the processor 102.

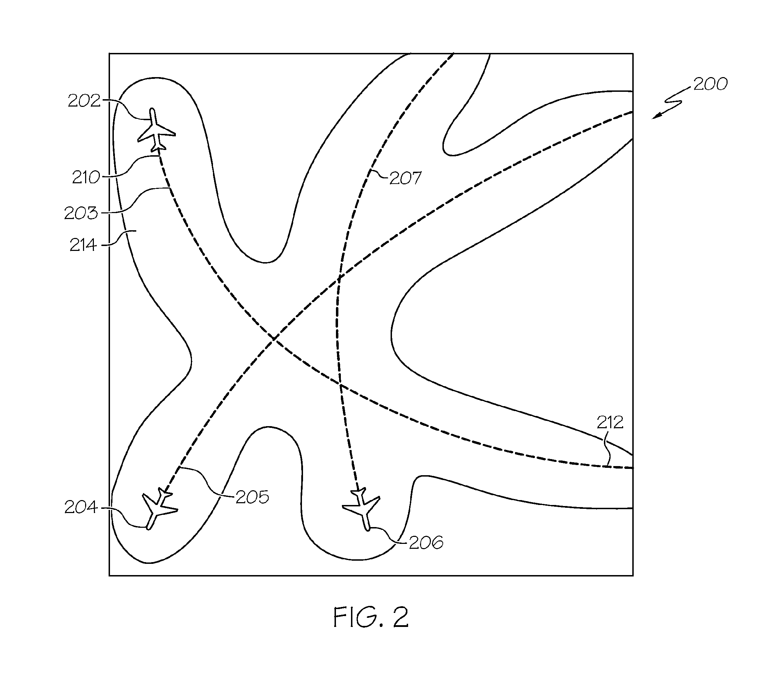

Referring to FIG. 2, a presentation 200 illustrates the uncertainty of weather data collected from three aircraft 202, 204, 206. The weather data collected in the exemplary embodiment is wind, but may be other atmospheric data such as precipitation. Though three aircraft are depicted, the number of aircraft may be one or more. Each of the aircraft 202, 204, 206 determines a current wind magnitude and direction from on-board sensors and transmit the information to a ground station and/or other aircraft. As each of the aircraft proceed on its trajectory 203, 205, 207 (flight path), respectively, the earlier recorded data becomes less reliable since the wind magnitude may change over time. For example, the wind magnitude recorded for aircraft 202 at time 210 on the trajectory 203 is more reliable since it is recorded more recently than the wind magnitude recorded at time on position 212. This greater reliability is illustrated by, for example, the region 214 for the aircraft 202.

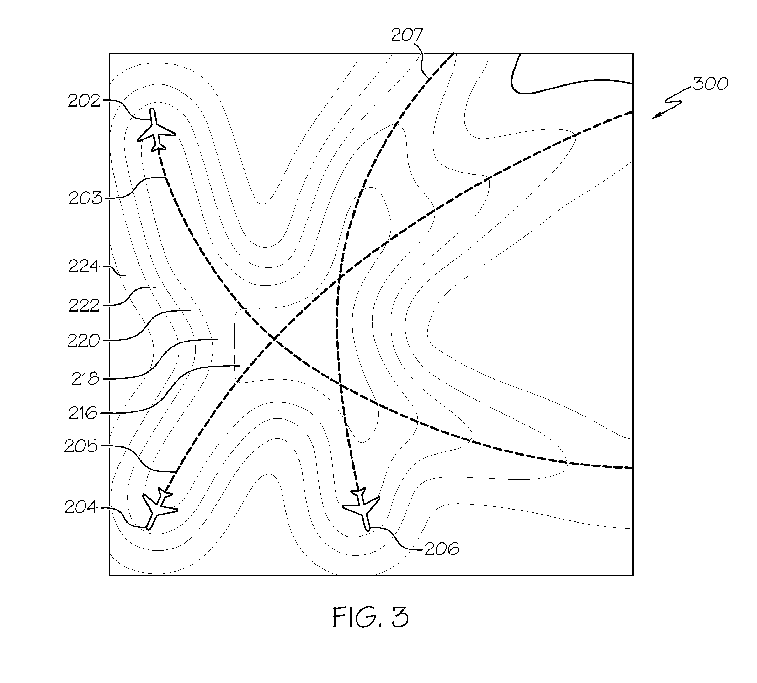

A threshold uncertainty map 300 (represented by the presentation of FIG. 3) is generated by the wind magnitude measurements made by the aircraft 202, 204, 206. In addition to the temporal importance discussed in the preceding paragraph, there is also a reliability factor due to the spatial displacement of the aircraft 202, 204, 206. By a second aircraft recording a measurement is the same region of space as a first aircraft, the measurement of the first aircraft is confirmed, thereby increasing the reliability. This increased reliability is represented by region 216. As may be seen in FIG. 3, various levels 216, 218, 220, 222, 224 of certainty may be assigned to the trajectories flown by the aircraft 202, 204, 206, and therefore, may be assigned to the measurements of the wind magnitudes taken along those trajectories 203, 205, 207.

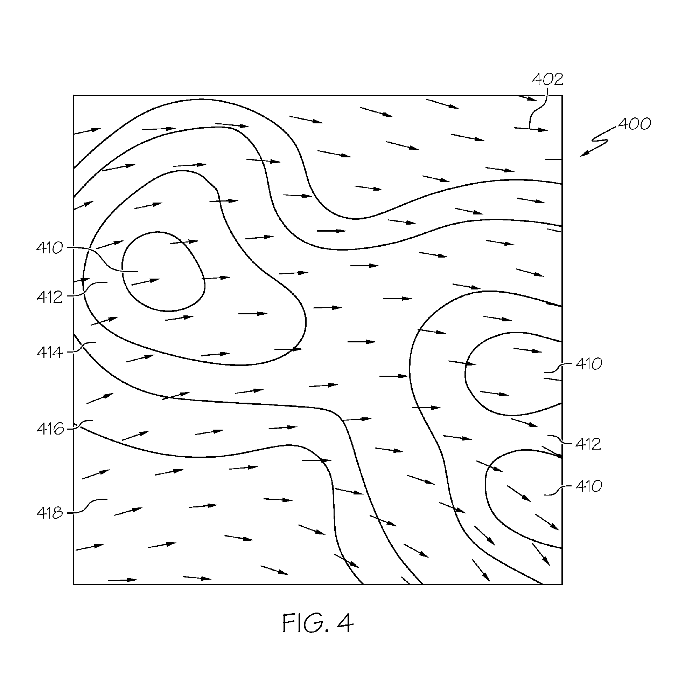

Referring to FIG. 4, the representation 400 illustrates a weather data grid of weather information collected from a database, including wind magnitudes in this described exemplary embodiment. This collected weather information may be collected prior to, simultaneously with, or subsequent to, collecting the weather data from three aircraft 202, 204, 206. The location of the database is not limited and may be terrain based, for example, the rapid update cycle (RUC) database provided in the continental United States. The representation 400 may include a wind field of symbols 402 indicating the direction of the wind at various locations. The representation 400 also includes mapped areas 410, 412, 414, 416, 418 representing areas of wind magnitude, from higher magnitude winds 410 to the lowest magnitude winds 418. While unmodified forecasted data may be used, the forecasted data may be modified to obtain a stochastic model provided by the Lymperopoulos mathematical process mentioned above.

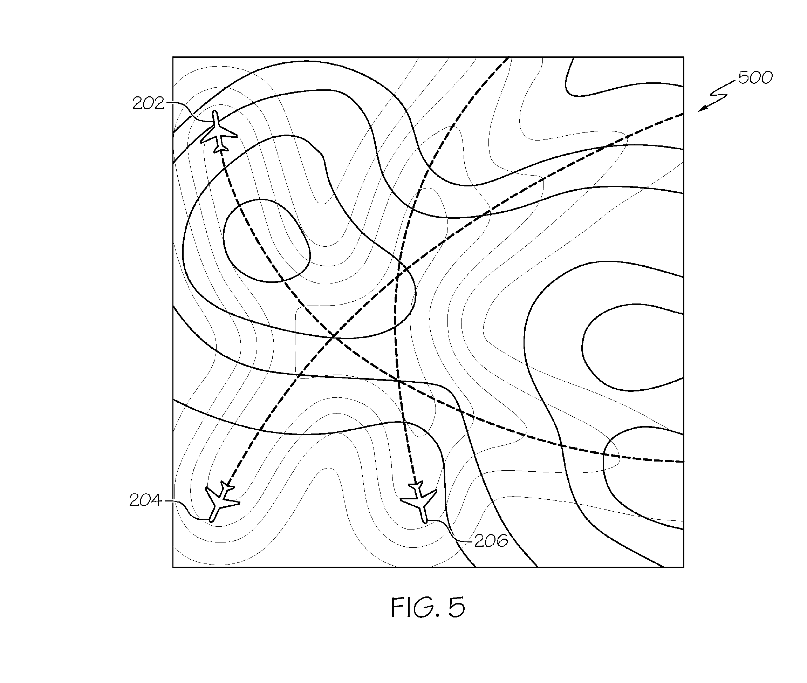

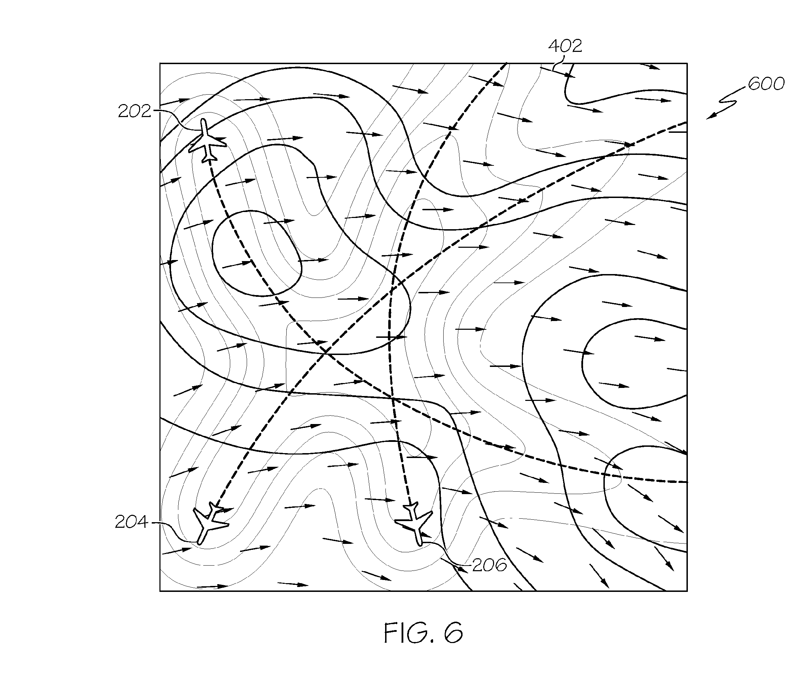

The representation 500 of FIG. 5 is the threshold uncertainty map 300 superimposed on the mapped areas 410, 412, 414, 416, 418 of the weather data grid 400 (minus the wind field symbols 402). FIG. 6 is a representation 600 of the nominal portion of the wind field symbols 402 combined with the stochastic portion (uncertainty areas coming from data provided by aircraft 202, 204, 206) resulting in a real weather scenario.

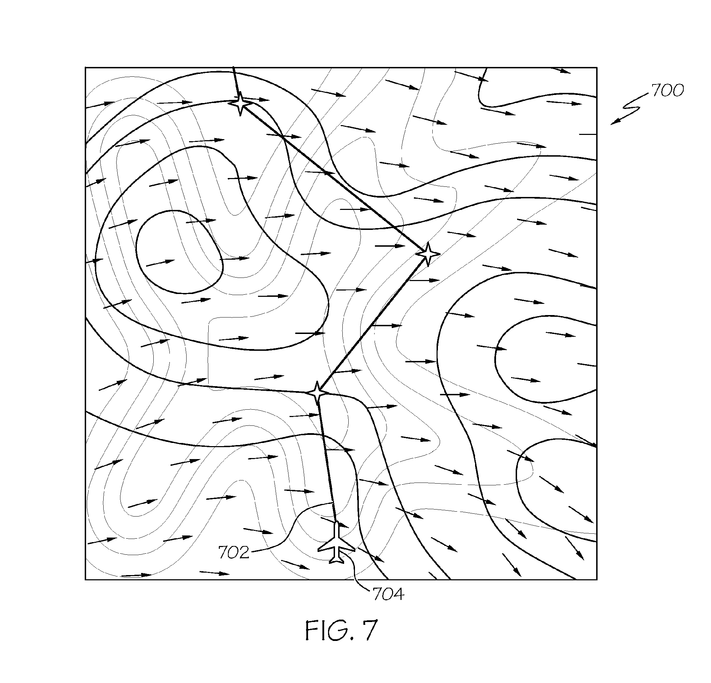

FIG. 7 is a display of the representation 700 that is provided to the aircraft crew on display device 104 to assist the aircrew with making route decisions. The planed route of flight 702 (trajectory) of aircraft 704 may be displayed so the aircrew may consider whether to alter the flight plan to take advantage of the winds (some locations may have detrimental winds, for example a headwind or strong cross wind, and others may have advantageous winds, for example a tailwind). The display of the route of flight 702 is optional.

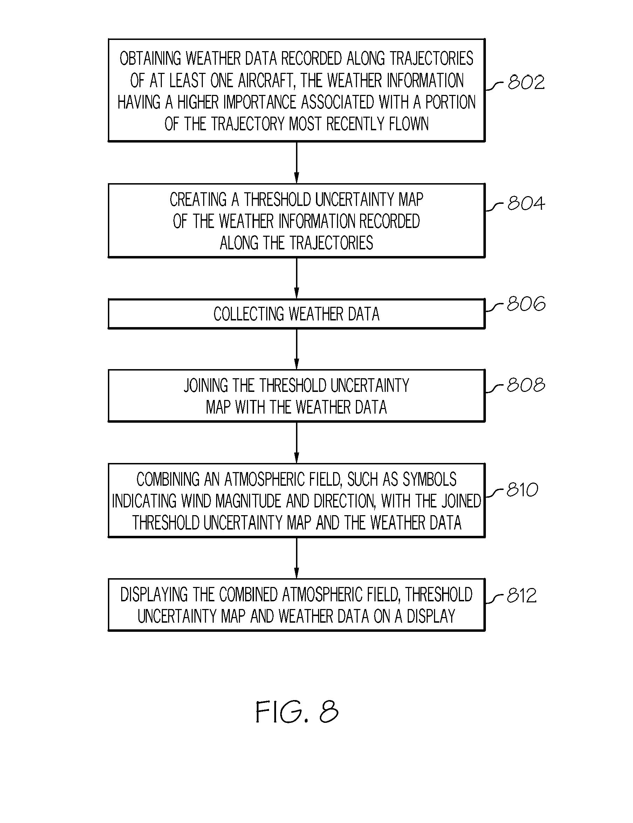

FIG. 8 is a flow chart illustrating the steps of the method of the exemplary embodiment for presenting atmospheric uncertainties, including obtaining 802 trajectories 203, 205, 207 of at least one aircraft 202, 204, 206, respectively, the trajectories of the at least one aircraft having a higher importance 210 associated with that most recently flown. A threshold uncertainty map 300 of the trajectories is created 804 and weather data 400 is collected 806 and combined 808 with the threshold uncertainty map 300. Atmospheric field data is combined 810 with the weather data 400 and the threshold uncertainty map 300, thereby combining the nominal portion of the wind field with the stochastic portion of the uncertainty area provided by the at least one aircraft 202, 204, 206, resulting in a real weather scenario. The combined weather data 400 and threshold uncertainty map 300 is displayed 812 with the weather data.

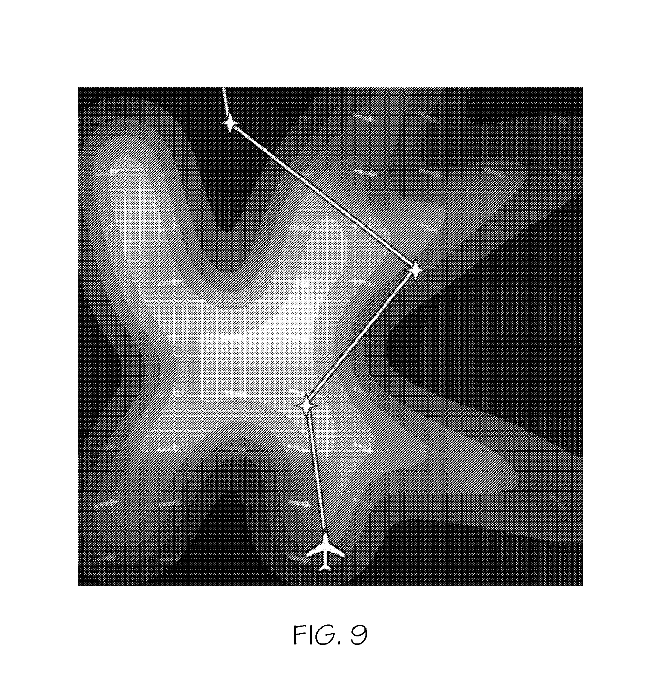

It should be noted that FIGS. illustrate areas 216, 218, 220, 224, 410, 412, 414, 416, 418 of different values. One object disclosed herein is to display in two dimensions the current weather situation, such as the wind, to assist the flight crew in evaluating the current situation, thereby leading to improved economy and safety. This display is best provided such that the aircrew may readily understand the information presented, for example, by using different colors depicting uncertainty by levels of transparency. For example, areas for which there is enough data (they have very low uncertainty) are very bright (completely transparent) and show all weather data (magnitude and direction) that are available, whereas the areas where are no data available (they have very high uncertainty) are very dark (opaque). Additionally, the areas 216, 218, 220, 224, 410, 412, 414, 416, 418 may gradually change in value from one area to another as depicted by a change in brightness or color. An example of such a color display as presented to the aircrew may be seen in FIG. 9

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of presenting atmospheric uncertainties, comprising
collecting weather data;
obtaining weather information recorded along trajectories of at least one vehicle, the weather information having a higher importance proportional to the portion of the trajectory most recently traversed;
creating a threshold uncertainty map of the weather information obtained along the trajectories;
joining the threshold uncertainty map with the weather data;
combining an atmospheric field with the joined threshold uncertainty map and the weather data; and
displaying the combined atmospheric field, threshold uncertainty map, and weather data on a display.

2. The method of claim 1 wherein the displaying step comprises displaying the meteorological data as wind symbols.

3. The method of claim 1 wherein the at least one vehicle obtains the weather information and the method further comprises assigning a higher importance to the weather information most recently recorded.

4. The method of claim 1 wherein the displaying step includes displaying forecasted data.

5. The method of claim 1 wherein the weather information comprises wind magnitude and direction.

6. The method of claim 1 wherein the displaying step comprises displaying on a ground based display.

7. The method of claim 1 wherein the displaying step comprises displaying aboard the vehicle.

8. The method of claim 7 where the displaying step comprises displaying aboard an aircraft.
